# EUROPEAN PATENT APPLICATION

(11) **EP 4 283 015 A1**
(43) Date of publication of application: **29.11.2023**
(21) Application number: 22742644.2
(22) Date of filing: 20.01.2022
(51) Int. Cl.: C23F 11/12, A01N 59/08, A01P 3/00, C11D 1/04, C11D 1/68, C11D 1/72, C11D 3/39

(54) **CORROSION INHIBITOR FOR HYPOCHLOROUS ACID AQUEOUS SOLUTION, BACTERICIDAL DETERGENT HAVING CORROSION INHIBITING EFFECT, AND PREPARATION METHOD THEREFOR**

(30) Priority: 22.01.2021 JP 2021008469
(71) Applicant: Tokuyama Dental Corporation, Tokyo 110-0016 (JP)
(72) Inventor: HITOMI, Miki, Tokyo 110-0016 (JP); TAKAHASHI, Ayumi, Tokyo 110-0016 (JP)
(74) Representative: Gulde & Partner
(86) International application number: PCT/JP2022/001977
(87) International publication number: WO 2022/158522

(57) **Abstract**

The present invention provides a corrosion inhibitor which is for a hypochlorous acid aqueous solution and imparts a corrosion inhibiting effect of suppressing the generation of rust in a contacted metal surface to a hypochlorous acid aqueous solution, the corrosion inhibitor being characterized in that an effective component substantially includes only: an A component composed of (Al) a metal salt of formic acid and/or (A2) a metal salt of saturated carboxylic acid in which the number n of carbon atoms contained in the molecule is at least 2, the valence v of the acid is 1 or 2, and the value n/v obtained by dividing the number n of carbon atoms by the valence v of the carboxylic acid is 2-6; and a B component composed of a nonionic surfactant, wherein the mass ratio B/A of the B component to the A component in the effective component is 0.005-10.0.

## Description

### Technical Field

The present invention relates to a rust inhibitor for hypochlorous acid aqueous solution, a bactericidal detergent having a rust inhibiting effect, and a method for preparing the same.

### Background Art

The existence form of hypochlorous acid in an aqueous solution changes depending on pH. The dissociation constant pKa of hypochlorous acid at 25°C is 7.53, and therefore the ratio between hypochlorous acid in molecular form (HClO) (hereinafter also referred to as "molecular hypochlorous acid") and hypochlorite ion (OCl⁻) (hereinafter also referred to as "ionic hypochlorous acid") at pH 7.5 is 1:1. Specifically, the abundance ratio of hypochlorous acid in molecular form (HClO) increases when the pH decreases from 7.5 toward the acid side, and on the other hand, the abundance ratio of hypochlorite ion (OCl-) increases when the pH increases from 7.5 toward the alkali side. More specifically, hypochlorous acid is almost present as hypochlorous acid in molecular form (HClO) in a weakly acidic range of about pH 3 to 6 (a hypochlorous acid aqueous solution with a pH in such a pH range is particularly called a weakly acidic hypochlorous acid aqueous solution), and is almost present as hypochlorite ion (OCl⁻) in a basic range of pH 9 or higher. In a strongly acidic range (e.g., at lower than pH 3), generation of chlorine molecules (Cl₂) becomes dominant as the pH decreases.

Among these existence forms, molecular hypochlorous acid (HClO) has an extremely high bactericidal effect, and the bactericidal effect is said to be about 80 times that of hypochlorite ion (OCl⁻). A weakly acidic hypochlorous acid aqueous solution with a pH of 3 to 6 containing a large amount of molecular hypochlorous acid having such a high bactericidal effect has relatively high safety to the human body, and is therefore used as a sterilizer or a bactericide in various fields such as medical care, dental care, agriculture, and food processing (see Patent Literatures 1, 2, and 3, and Non-Patent Literature 1).

However, chlorine-based sterilizers and bactericides are known to have metal corrosivity, and the same applies to hypochlorous acid. Further, an aqueous solution of molecular hypochlorous acid has higher corrosivity than an aqueous solution of salt of hypochlorous acid (ionic hypochlorous acid), such as sodium hypochlorite, with a high pH, and therefore corrodes metal at a lower concentration and in a shorter time. In order to solve such a problem of metal corrosivity of ionic hypochlorous acid and molecular hypochlorous acid (which are collectively called hypochlorous acid), a bactericidal detergent containing a rust inhibitor composed of an organic acid and a salt thereof or an inorganic rust inhibitor and a bactericidal detergent containing a buffering agent have been proposed.

For example, Patent Literature 4 discloses a "bactericidal composition comprising (A) at least one selected from among hypochlorous acid and an alkali metal hypochlorite, (B) at least one selected from among a polyhydric alcohol derivative-type surfactant, a cationic surfactant, and an amphoteric surfactant, (C) at least one selected from among an organic acid and a salt thereof, and (D) a rust inhibitor", and describes that the rust inhibitor is at least one selected from among phosphoric acid, polyphosphoric acid, phosphonic acid, and salts thereof.

Patent Literature 5 discloses an "aqueous bactericidal composition comprising (a) hypochlorous acid or at least one component that releases hypochlorous acid in water and (b) a buffering agent, wherein a concentration of effective chlorine in the composition upon use is 0.0001 to 12%". Further, Patent Literature 5 describes that metal corrosion can effectively be inhibited by adding the buffering agent to a hypochlorous acid-based aqueous solution conventionally used as a bactericide so that the molar concentration of the buffering agent is 5 times or more that of effective chlorine, and that preferred examples of the buffering agent include organic acids and salts of organic acids, and acetic acid and/or alkali metal salts of acetic acid are particularly preferred.

### Citation List

### Patent Literatures

Patent Literature 1: JP 2019-202907 A
Patent Literature 2: JP 2000-109887 A
Patent Literature 3: JP 2010-138101 A
Patent Literature 4: JP 2002-161011 A
Patent Literature 5: WO 2006/057311

### Non-Patent Literature

Non-Patent Literature 1: "Science of Hypochlorous Acid", written by Satoshi Fukuzaki, published by Yoneda Shuppan, 2012, p.17-22

### Summary of Invention

### Technical Problem

The inorganic rust inhibitor, such as phosphoric acid or polyphosphoric acid, used in Patent Literature 4 exhibits a rust inhibiting effect by depositing a metal salt on a metallic surface to form a film. However, when such a rust inhibitor is used, rust may partially be generated due to uneven film formation or a deposition may remain on a metallic surface even after washing with water. On the other hand, a study by the present inventor et al. has revealed that the buffering agent, such as acetic acid and/or an alkali metal salt of acetic acid, used in Patent Literature 5 to impart a rust inhibiting effect is effective at inhibiting generation of rust on metal resistant to rust, such as stainless steel (SUS), but the buffering agent cannot be said to have a sufficient rust inhibiting effect on a rust-prone metal such as steel.

Further, the hypochlorous acid aqueous solution-based bactericidal composition needs to maintain an effective chlorine concentration at the time of preparation for at least about several hours after preparation, and desirably has a neutral pH or a pH extremely close to neutrality from the viewpoint of safety during handling.

It is therefore an object of the present invention to provide a rust inhibitor for hypochlorous acid aqueous solution which is used to prepare a hypochlorous acid aqueous solution-based bactericidal composition, which does not contain an inorganic rust inhibitor, such as phosphoric acid or polyphosphoric acid, as its effective component, and which is added to a hypochlorous acid aqueous solution so that even when used for an article having a surface made of a rust-prone metal such as steel, the hypochlorous acid aqueous solution exhibits a rust inhibiting effect to inhibit generation of rust on the metallic surface contacted thereby, can maintain an effective chlorine concentration at the time of preparation for about several hours after preparation, and can maintain a neutral pH or a pH extremely close to neutrality.

### Solution to Problem

In order to achieve the above object, a first aspect of the present invention is directed to a rust inhibitor for hypochlorous acid aqueous solution to impart a rust inhibiting effect to a hypochlorous acid aqueous solution to inhibit generation of rust on a metallic surface contacted by the hypochlorous acid aqueous solution, the rust inhibitor comprising an effective component substantially including only: an A component composed of (A1) a metal salt of formic acid and/or (A2) a metal salt of a saturated carboxylic acid whose number n of carbon atoms contained in a molecule is 2 or more, whose valence v of the acid is 1 or 2, and whose value n/v obtained by dividing the number n of carbon atoms by the valence v of the carboxylic acid is 2 to 6; and a B component composed of a nonionic surfactant, wherein a mass ratio B/A of the B component to the A component in the effective component is 0.005 to 10.0.

The rust inhibitor for hypochlorous acid aqueous solution according to the above aspect (hereinafter also referred to as "rust inhibitor for hypochlorous acid aqueous solution of the present invention") is preferably composed of an aqueous solution of the effective component, the A component is preferably composed of a metal salt of a saturated monocarboxylic acid whose v is 1, and the B component is preferably composed of a polyglycerin fatty acid ester and/or a polyoxyethylene alkyl ether.

A second aspect of the present invention is directed to a method for preparing a bactericidal detergent that includes a hypochlorous acid aqueous solution having an effective chlorine concentration of 2 to 2000 ppm by mass and a pH of 5.5 to 7.5 and that has a rust inhibiting effect to inhibit generation of rust on a metallic surface contacted thereby, the method comprising the step of diluting, with water or an aqueous solvent, a hypochlorous acid aqueous solution that has an effective chlorine concentration higher than that of the hypochlorous acid aqueous solution described above and a pH of 3 to 7.5 and that does not contain a metal salt of a saturated carboxylic acid and a nonionic surfactant, wherein during dilution in the dilution step, the rust inhibitor for hypochlorous acid aqueous solution of the present invention is added so that a concentration of the effective component is 1000 ppm by mass to 25% by mass with respect to a mass of a hypochlorous acid aqueous solution obtained after dilution.

In the preparation method according to the above aspect (hereinafter also referred to as "method for preparing a bactericidal detergent of the present invention"), the rust inhibitor for hypochlorous acid aqueous solution is preferably added in the dilution step so that a ratio C_{A}/C_{EC} of a concentration C_{A} (ppm by mass) of the A component to an effective chlorine concentration C_{EC} (ppm by mass) after dilution is 2 to 1000.

A third aspect of the present invention is directed to a bactericidal detergent comprising a hypochlorous acid aqueous solution in which the rust inhibitor for hypochlorous acid aqueous solution of the present invention is dissolved, the hypochlorous acid aqueous solution having an effective chlorine concentration of 2 to 2000 ppm by mass, a pH of 5.5 to 7.5, a concentration of the effective component of 1000 ppm by mass to 25% by mass, and a ratio C_{A}/C_{EC} of a concentration C_{A} (ppm by mass) of the A component to the effective chlorine concentration C_{EC} (ppm by mass) of 2 to 1000.

It is preferred that the bactericidal detergent according to the above aspect (hereinafter also referred to as "bactericidal detergent of the present invention) does not substantially contain phosphoric acid, polyphosphoric acid, phosphonic acid, and salts thereof.

### Advantageous Effects of Invention

The rust inhibitor for hypochlorous acid aqueous solution of the present invention can impart a rust inhibiting effect to a hypochlorous acid aqueous solution when added to the hypochlorous acid aqueous solution. Further, the rust inhibitor for hypochlorous acid aqueous solution of the present invention does not contain an inorganic rust inhibitor, such as phosphoric acid or polyphosphoric acid, as its effective component, and therefore the above-described problem caused by such an inorganic rust inhibitor does not occur. Further, the obtained rust inhibiting effect is higher than that obtained by adding a buffering agent such as acetic acid and/or an alkali metal salt of acetic acid, and even when a hypochlorous acid aqueous solution containing the rust inhibitor for hypochlorous acid aqueous solution of the present invention is used for an article having a surface made of a rust-prone metal such as steel, generation of rust on the metallic surface contacted by the hypochlorous acid aqueous solution can effectively be inhibited. Further, when the rust inhibitor for hypochlorous acid aqueous solution of the present invention is added to a hypochlorous acid aqueous solution, the hypochlorous acid aqueous solution can maintain an effective chlorine concentration at the time of preparation for at least about several hours after the addition of the rust inhibitor and can maintain a neutral pH or a pH extremely close to neutrality.

In general, from the viewpoint of stability during long-term storage (prevention of a reduction in effective chlorine concentration) and saving of a storage space, a hypochlorous acid aqueous solution-based bactericidal composition is provided as a hypochlorous acid aqueous solution with a high effective chlorine concentration supposed to be diluted before use, and therefore such a hypochlorous acid aqueous solution that can be stored in a state where a high effective chlorine concentration is maintained (hereinafter also referred to as "thick undiluted solution") is diluted to a predetermined concentration before use, that is, is used to prepare a desired bactericidal detergent before use (preparation performed every time before use is referred to as "preparation before use").

The rust inhibitor for hypochlorous acid aqueous solution of the present invention contains two effective components previously mixed at a predetermined mixing ratio such that the above-described effects are exerted, and an effective component composed of a mixture of them can stably be stored at a high concentration for a long time period. Therefore, the rust inhibitor for hypochlorous acid aqueous solution of the present invention is extremely effective as a rust inhibitor for hypochlorous acid aqueous solution used to prepare a hypochlorous acid aqueous solution-based bactericidal composition having a rust inhibiting effect before use. That is, the bactericidal detergent of the present invention that can maintain a chlorine concentration effective for disinfection for at least about several hours from just after preparation and that has a neutral pH or a pH extremely close to neutrality for easy handling can easily be prepared by an extremely simple method in which a small amount of the rust inhibitor for hypochlorous acid aqueous solution of the present invention is added during dilution in the above-described preparation before use (i.e., by the method for preparing a bactericidal detergent of the present invention).

### Description of Embodiments

The present invention has been established on the basis of the findings, obtained by the study of the present inventor et al., that "a rust inhibiting effect can be imparted by adding a nonionic surfactant to a weakly acidic hypochlorous acid aqueous solution" and that "the combined use of a metal salt of a specific saturated carboxylic acid and a nonionic surfactant in a predetermined mixing ratio exerts a higher rust inhibiting effect due to a synergy effect as compared to a case where they are used singly, and can prevent a pH reduction caused by using a nonionic surfactant singly". It should be noted that Patent Literature 3 describes that 0.001 to 10% of a surfactant such as an alkyl ether sulfate may be added to an aqueous bactericidal composition to improve detergency, but does not recognize that a nonionic surfactant has a rust inhibiting effect. Therefore, it can be said that the above-described findings have been confirmed first by the present inventor et al.

It should be noted that the reason why such effects as described above can be obtained by the combined use of a metal salt of a specific saturated carboxylic acid and a nonionic surfactant in a predetermined mixing ratio is not clear. Although the present invention is not bound by any particular theory, the present inventor et al. estimate that the reason is as follows. Specifically, the present inventor et al. estimate that the coexistence of a nonionic surfactant and a metal salt of a specific saturated carboxylic acid allows carboxylic acid anions to stably be present on a metallic surface by adsorption, and the nonionic surfactant itself also adheres to the metallic surface (onto which carboxylic acid anions have not been adsorbed) and exerts a rust inhibiting effect so that a higher rust inhibiting effect is obtained, and that interaction between a metal salt of a specific saturated carboxylic acid and a nonionic surfactant inhibits oxidation of the nonionic surfactant, that is, reduction (decomposition) of molecular hypochlorous acid (involving generation of hydrochloric acid) so that a pH reduction does not occur.

Hereinbelow, a rust inhibitor for hypochlorous acid aqueous solution of the present invention, a method for preparing a bactericidal detergent of the present invention, and a bactericidal detergent of the present invention will be described in detail. It should be noted that the expression "x to y" herein means "equal to or more than x and equal to or less than y", and when only y is expressed in any unit, x also has the same unit.

### 1. Rust inhibitor for hypochlorous acid aqueous solution of present invention

The rust inhibitor for hypochlorous acid aqueous solution of the present invention is intended to impart a rust inhibiting effect to a hypochlorous acid aqueous solution to inhibit generation of rust on a metallic surface contacted by the hypochlorous acid aqueous solution. As described above, a hypochlorous acid aqueous solution-based bactericidal composition is often prepared by diluting a thick undiluted solution with water before use. The rust inhibitor for hypochlorous acid aqueous solution of the present invention is an additive supposed to be added during dilution in such preparation before use, and is independently packaged (filled in a container or the like) per se and distributed as a product.

The main feature of the rust inhibitor for hypochlorous acid aqueous solution of the present invention is that the effective component thereof, that is, the component thereof contributing to rust inhibition substantially includes only: an A component composed of (A1) a metal salt of formic acid and/or (A2) a metal salt of a saturated carboxylic acid whose number n of carbon atoms contained in a molecule is 2 or more, whose valence v of the acid is 1 or 2, and whose value n/v obtained by dividing the number n of carbon atoms by the valence v of the carboxylic acid is 2 to 6; and a B component composed of a nonionic surfactant. That is, the effective component of the rust inhibitor for hypochlorous acid aqueous solution of the present invention needs to include the mixture containing the A component composed of (A1) and/or (A2) and having a mass ratio B/A of the B component to the A component of 0.005 to 10.0. When a carboxylic acid metal salt other than (A1) and (A2) is used or the mass ratio of the B component to the A component is out of the above range, it is difficult to obtain the effects of the present invention. From the viewpoints of a rust inhibiting effect, a pH reduction, and an effective chlorine concentration reduction, the mass ratio is preferably 0.02 to 5.0, particularly preferably 0.05 to 1.0.

It should be noted that the expression "the effective component substantially includes only the mixture" means that the effective component substantially contains no other components having rust inhibiting function, and specifically means that the ratio of the mass of the mixture to the total mass of the effective component is 99.0% by mass or more, particularly 99.9% by mass or more. When the effective component includes phosphoric acid, polyphosphoric acid, phosphonic acid and salts thereof, specifically salts thereof with alkali metals such as sodium and potassium, a hypochlorous acid aqueous solution after dilution may yield a white turbidity, and therefore the content thereof is preferably 100 ppm or less, particularly preferably 10 ppm or less with respect to the total mass of the effective component, and most preferably, the effective component does not include these acids and salts thereof at all.

The rust inhibitor for hypochlorous acid aqueous solution of the present invention may comprise only the effective component, but is preferably an aqueous solution whose concentration of the effective component is 1000 ppm by mass to 80% by mass, preferably 2000 ppm by mass to 60% by mass from the viewpoint of ease of handling.

Hereinbelow, a hypochlorous acid aqueous solution to which the rust inhibitor for hypochlorous acid aqueous solution of the present invention is applied and the A component and the B component as effective components will be described in detail.

### 1-1. Hypochlorous acid aqueous solution

The hypochlorous acid aqueous solution to which the rust inhibitor for hypochlorous acid aqueous solution of the present invention is applied is not limited as long as it is an aqueous solution in which molecular hypochlorous acid (HClO) is dissolved, and ionic hypochlorous acid or chlorine may be present together with molecular hypochlorous acid and dissolved in the aqueous solution. However, from the viewpoints of safety and the strength of bactericidal power per effective chlorine concentration, an aqueous solution is preferred in which 50% or more of the effective chlorine concentration is derived from molecular hypochlorous acid. As described above, the existence form of effective chlorine in hypochlorous acid water depends on the pH of the aqueous solution, and the abundance ratio between different existence forms is almost unambiguously determined by the pH. Therefore, when specified by the pH, the hypochlorous acid aqueous solution to which the rust inhibitor for hypochlorous acid aqueous solution of the present invention is suitably applied preferably has a pH of 3.0 to 7.5 and particularly preferably has a pH of 3.5 to 7.2.

The effective chlorine concentration of the hypochlorous acid aqueous solution to which the rust inhibitor for hypochlorous acid aqueous solution of the present invention is applied is preferably 2 to 2000 ppm by mass from the viewpoints of a bactericidal effect and a rust inhibiting effect. If the effective chlorine concentration is less than 2 ppm by mass, a sufficient bactericidal effect tends to be difficult to obtain, and if the effective chlorine concentration exceeds 2000 ppm by mass, a bactericidal effect is saturated, and therefore a further rust inhibiting effect is difficult to obtain. From the viewpoint of bactericidal efficiency, the effective chlorine concentration is preferably 10 to 1500 ppm by mass, more preferably 30 to 1000 ppm by mass.

It should be noted that the effective chlorine concentration (ppm by mass) means a total chlorine equivalent concentration of a chlorine molecule, a chlorine compound having oxidation power (e.g., molecular hypochlorous acid), and a chlorine atom-containing ion having oxidation power (e.g., ionic hypochlorous acid) dissolved in an aqueous solution, and more specifically means a concentration determined by converting the mass-based concentration of each component into a mass-based chlorine concentration and then summing the thus determined concentrations. In the present invention, a concentration measured by absorptiometry using an iodine reagent is adopted as an effective chlorine concentration. For example, such a concentration can be measured using an effective chlorine concentration measurement kit, AQ-202 (SIBATA SCIENTIFIC TECHNOLOGY LTD.).

Such molecular hypochlorous acid water can be produced by, for example, an electrolytic method in which a sodium chloride aqueous solution is electrolyzed, a hydrochloric acid method in which hydrochloric acid is added to a basic hypochlorite aqueous solution, or an ion-exchange method in which a raw material aqueous solution including a hypochlorite aqueous solution is treated with an ion-exchange resin.

### 1-2. A component: Metal salt of specific saturated carboxylic acid

The rust inhibitor for hypochlorous acid aqueous solution of the present invention uses, as one of effective components, an A component composed of (A1) a metal salt of formic acid and/or (A2) a metal salt of a saturated carboxylic acid whose number n of carbon atoms contained in a molecule is 2 or more, whose valence v of the acid is 1 or 2, and whose value n/v obtained by dividing the number n of carbon atoms by the valence v of the carboxylic acid is 2 to 6. The saturated carboxylic acid herein means a saturated carboxylic acid not having carbon-carbon unsaturated bonds, specifically a carbon-carbon double bond and a carbon-carbon triple bond in its molecule. Further, "n" represents the number of all the carbon atoms contained in a carboxylic acid molecule including the carbon atom of a carboxyl group, and "v" means the number of H⁺ ions that one molecule of a carboxylic acid can release, that is, the number of carboxyl groups contained in a molecule. In other words, (A2) can be said to be a metal salt of a saturated monocarboxylic acid or saturated dicarboxylic acid whose n/v is 2 to 6. When a metal salt of an unsaturated carboxylic acid is used as a carboxylic acid metal salt or a saturated carboxylic acid metal salt not satisfying the above requirements is used, the effective chlorine concentration of a hypochlorous acid aqueous solution significantly reduces in about several hours.

From the viewpoint of a rust inhibiting effect, the A component is preferably (A2) whose n/v is 2 to 4, more preferably (A2) whose n/v is 2 to 4 and whose v is 1. Preferred examples of the saturated carboxylic acid that can be used include acetic acid, propionic acid, and butyric acid.

A metal constituting the salt is not limited and may be, for example, sodium, potassium, calcium, magnesium, strontium, or zinc. From the viewpoint of the stability of a rust inhibiting effect, a polyvalent metal such as a di- or higher-valent metal is preferably selected, and from the viewpoint of safety and handleability, an alkaline-earth metal such as calcium or magnesium is particularly preferably used.

Specific examples of the saturated carboxylic acid metal salt particularly suitably used as the A component include calcium acetate, magnesium acetate, and calcium propionate. It should be noted that these saturated carboxylic acid metal salts may be used in combination of two or more of them.

### 1-3. B component: Nonionic surfactant

The rust inhibitor for hypochlorous acid aqueous solution of the present invention uses a nonionic surfactant as a B component that is the other effective component. When an ionic surfactant such as an anionic surfactant, a cationic surfactant, or an amphoteric surfactant is used as a surfactant, the rust inhibiting effect of the A component cannot be further enhanced, which is considered to result from the fact that these ionic surfactants themselves do not have a rust inhibiting effect, and further the effective chlorine concentration may significantly reduce in about several hours.

The nonionic surfactant as the B component is not limited as long as it is a surfactant composed of a compound that is not ionized when dissolved in water, and examples of such a surfactant that can be used include a glycerin fatty acid ester, a polyglycerin fatty acid ester, a sorbitan fatty acid ester, a sucrose fatty acid ester, a fatty acid polyethylene glycol, a fatty acid polyoxyethylene sorbitan, a polyglycerin alkyl ether, a polyoxyethylene alkyl ether, a polyoxyethylene phenyl ether, a polyoxyethylene olefin-based ether, and a fluorine-based nonionic surfactant. Among them, for the reason that the effective chlorine concentration is unlikely to reduce, a nonionic surfactant not containing a carbon-carbon multiple bond in its molecule is preferably used, and from the viewpoints of the stability of physical properties and availability, a nonionic surfactant composed of a polyglycerin fatty acid ester and/or a polyoxyethylene alkyl ether is particularly preferably used.

### 2. Method for preparing bactericidal detergent of present invention

The bactericidal detergent means a detergent for removing stains from an article and/or a bactericide for killing or removing (disinfecting or sterilizing) microorganisms, such as bacteria, adhering to an article. The bactericidal detergent obtained by the method for preparing a bactericidal detergent of the present invention includes a hypochlorous acid aqueous solution having an effective chlorine concentration of 2 to 2000 ppm by mass and a pH of 5.5 to 7.5 and has a rust inhibiting effect to inhibit generation of rust on a metallic surface contacted thereby. The rust inhibitor for hypochlorous acid aqueous solution of the present invention is added when a thick undiluted solution having a higher effective chlorine concentration than the above-described hypochlorous acid aqueous solution and a pH of 3.0 to 7.5 is diluted with water or an aqueous solvent to have an effective chlorine concentration suitable for a desired bactericidal detergent (dilution step). The thick undiluted solution herein used does not contain a metal salt of a saturated carboxylic acid and a nonionic surfactant as well as an inorganic rust inhibitor such as phosphoric acid or polyphosphoric acid. It should be noted that water used as a solvent for a raw material aqueous solution and a desired bactericidal detergent and water used for dilution are not limited and may be, for example, purified water or tap water. Alternatively, an aqueous solvent including a water-soluble organic solvent such as an alcohol may be used for dilution.

Such a thick undiluted solution can appropriately be produced by, for example, a method described in Patent Literature 1. Specifically, the thick undiluted solution can appropriately be produced by a method comprising: an ion exchange step of mixing a raw material aqueous solution including an aqueous solution of metal salt of hypochlorous acid and a weakly acidic ion-exchange resin and performing ion exchange between a metal ion and a hydrogen ion to generate molecular hypochlorous acid dissolved in a mixture; and a separation step of separating the weakly acidic ion-exchange resin from the mixture after the ion exchange step to obtain a desired aqueous solution including an aqueous solution in which the molecular hypochlorous acid is dissolved, wherein the raw material aqueous solution and the weakly acidic ion-exchange resin are mixed in the ion exchange step in a quantitative ratio such that a ratio (E_{MI}/E_{IE}) between a total ion exchange equivalent (E_{IE}) of the weakly acidic ion-exchange resin and a total chemical equivalent (E_{MI}) of the metal ion in the raw material aqueous solution is 0.05 or more and 0.5 or less, a solution temperature during mixing is 5°C or higher and 40°C or lower, and a mixing time is 10 minutes or longer and 120 minutes or shorter.

The effective chlorine concentration of the hypochlorous acid aqueous solution constituting the bactericidal detergent as a desired preparation is preferably 10 to 1500 ppm by mass, more preferably 30 to 1000 ppm by mass. The pH is more preferably 6.0 to 7.2. The effective chlorine concentration of the thick undiluted solution is preferably 100 ppm by mass to 3.0% by mass, particularly preferably 100 ppm by mass to 10000 ppm by mass.

The rust inhibitor for hypochlorous acid aqueous solution of the present invention exerts its effect even when added at a very high concentration (e.g., 25% by mass), and therefore the rust inhibitor for hypochlorous acid aqueous solution of the present invention may be added during the dilution (in the dilution step) so that the concentration of the effective component is 1000 ppm by mass to 25% by mass, preferably 1000 ppm by mass to 10% by mass, particularly preferably 5000 ppm by mass to 5% by mass with respect to the mass of a hypochlorous acid aqueous solution obtained after dilution. However, from the viewpoints of the effect and prevention of excessive use, the rust inhibitor for hypochlorous acid aqueous solution of the present invention is preferably added so that the ratio C_{A}/ C_{EC} of the concentration C_{A} (ppm by mass) of the A component to the effective chlorine concentration C_{EC} (ppm by mass) is 2 to 1000, particularly 50 to 100 while the above-described requirement is satisfied.

### 3. Bactericidal detergent of present invention

The bactericidal detergent of the present invention is also a desired preparation obtained by the method of the present invention and includes a hypochlorous acid aqueous solution having an effective chlorine concentration of 2 to 2000 ppm by mass, a pH of 5.5 to 7.5, a concentration of the effective component of 1000 ppm by mass to 25% by mass, and a ratio C_{A}/C_{EC} of the concentration C_{A} (ppm by mass) of the A component to the effective chlorine concentration C_{EC} (ppm by mass) of 2 to 1000.

The bactericidal detergent of the present invention may contain antibacterial metal ions such as a silver ion, a zinc ion, and a copper ion or a foaming agent including, as a metal ion supply source, a carbonate, a hydrocarbonate, and a double salt of a hydrocarbonate and a carbonate, if necessary, but the total amount C_{M} (ppm by mass) of these metal ions preferably satisfies a requirement represented by the formula: C_{M}/C_{EC} ≤ 0.35 and particularly preferably satisfies a requirement represented by the formula: C_{M}/C_{EC} ≤ 0.25. Further, various additives may be added by any method without impairing the effects of the present invention. For example, a thickening agent for forming a gel or a paste may be added to improve adhesion to an object to be disinfected. As such a thickening agent, inorganic particles are suitably used, and an inorganic powder having an average primary particle diameter of 5 nm or more and 100 nm or less is preferably used. Inorganic particles having an average primary particle diameter of 5 nm or more and 100 nm or less are preferably used.

The optional component may be added to the rust inhibitor for hypochlorous acid aqueous solution of the present invention or the hypochlorous acid aqueous solution.

The bactericidal detergent of the present invention can be prepared also by a method other than the method of the present invention. For example, the A component and the B component may be separately added during dilution of the thick undiluted solution, or regardless of whether the thick undiluted solution is used, a mixture of the A component and the B component may directly be added to a hypochlorous acid aqueous solution having a predetermined effective concentration and a predetermined pH or the A component and the B component may separately be added directly to a hypochlorous acid aqueous solution having a predetermined effective concentration and a predetermined pH.

The bactericidal detergent of the present invention contains highly bactericidal hypochlorous acid as an effective component (for disinfection) and further has high detergency resulting from a nonionic surfactant as well as a neutral pH or a pH very close to neutrality for ease of handling. Therefore, the bactericidal detergent of the present invention is useful for disinfection in various fields such as hospitals, food processing plants, education facilities, and nursing homes. Particularly, the bactericidal detergent of the present invention has an excellent characteristic that conventional hypochlorous acid water, particularly a conventional molecular hypochlorous acid-based bactericidal composition does not have, that is, the bactericidal detergent of the present invention is unlikely to cause metal corrosion (rust generation on metal) and therefore can be used not only for articles made of plastic, rubber, tile, brick, cement, glass, wood, fabric, non-woven fabric, vinyl, leather, and ceramic but also for metal-containing articles such as articles containing rust-prone metals such as steel, cobalt chrome, nickel, silver, zinc, and brass. The bactericidal detergent of the present invention can particularly suitably be used as a bactericidal detergent for cleaning and/or disinfecting articles at least part of surface of which is made of a rust-prone metal such as steel, cobalt chrome, nickel, silver, zinc, or brass.

A method for using the bactericidal detergent of the present invention is not limited. For example, the bactericidal detergent of the present invention may be brought into contact with an object by spraying, application, or immersion. Specific examples of the method include a method in which the bactericidal detergent is sprayed using a sprayer such as a trigger onto an area that should be disinfected and then wiped off, a method in which an object to be disinfected is immersed in the bactericidal detergent and then washed with water, a method in which the bactericidal composition is misted and sprayed into a space by an ultrasonic mist machine, a method in which an object is scraped with a material that can be soaked with the bactericidal detergent, such as a fabric or a non-woven fabric, and a method in which the bactericidal detergent is applied using a brush or a syringe onto an object to be disinfected and then removed by washing with water or wiped off. In the method in which an object to be disinfected is immersed in the bactericidal detergent, ultrasonic waves may be used to improve a cleaning effect. Further, the bactericidal detergent of the present invention may be used as a cleaning solution when a wash dispenser for use in cleaning and disinfecting medical tools is used.

### Examples

Hereinbelow, the present invention will specifically be described with reference to examples and comparative examples, but the present invention is not limited by these examples and comparative examples.

Abbreviations for raw materials used in examples and comparative examples and a preparation method will be described below. Specifically, compounds used in examples and comparative examples and their abbreviations are shown in the following 1 to 3, and a method for preparing a highly concentrated (molecular) hypochlorous acid aqueous solution used as a "thick undiluted solution" for preparing a hypochlorous acid aqueous solution-based bactericidal detergent will be described in the following 4.

### 1. Metal salts of carboxylic acids

### 1-1. A component

### (1) A1

Na-Fo: Sodium formate (manufactured by FUJIFILM Wako Pure Chemical Corporation)

### (2) A2

Ca-Ac: Calcium acetate monohydrate (manufactured by FUJIFILM Wako Pure Chemical Corporation)
Na-Ac: Sodium acetate (manufactured by FUJIFILM Wako Pure Chemical Corporation)
Mg-Ac: Magnesium acetate tetrahydrate (manufactured by FUJIFILM Wako Pure Chemical Corporation)
Zn-Ac: Zinc acetate dihydrate (manufactured by FUJIFILM Wako Pure Chemical Corporation)
Sr-Ac: Strontium acetate hemihydrate (manufactured by FUJIFILM Wako Pure Chemical Corporation)
Ca-Pr: Calcium propionate (manufactured by FUJIFILM Wako Pure Chemical Corporation)
Na-Pr: Sodium propionate (manufactured by FUJIFILM Wako Pure Chemical Corporation)
Na-Bu: Sodium butyrate (manufactured by Tokyo Chemical Industry Co., Ltd.)
Na-He: Sodium hexanoate (manufactured by Tokyo Chemical Industry Co., Ltd.)
Na-Su: Disodium succinate (manufactured by FUJIFILM Wako Pure Chemical Corporation)

### 1-2. Carboxylic acid metal salts not corresponding to A component

### (1) Saturated carboxylic acid metal salts

Na-Oc: Sodium octanoate (manufactured by FUJIFILM Wako Pure Chemical Corporation)
Na-No: Sodium nonanoate (manufactured by Tokyo Chemical Industry Co., Ltd.)
Na-De: Sodium decanoate (manufactured by Tokyo Chemical Industry Co., Ltd.)
Na-Ox: Sodium oxalate (manufactured by FUJIFILM Wako Pure Chemical Corporation)
Na-Ci: Trisodium citrate (manufactured by FUJIFILM Wako Pure Chemical Corporation)

### (2) Unsaturated carboxylic acid metal salts

Na-Me: Sodium methacrylate (manufactured by Tokyo Chemical Industry Co., Ltd.)
Na-Ma: Disodium maleate (manufactured by FUJIFILM Wako Pure Chemical Corporation)

### 2. Nonionic surfactants

### 2-1. B component: Nonionic surfactant

### (1) Nonionic surfactant not containing multiple bond in molecule

PGLE: Polyglyceryl-10 laurate (manufactured by Daicel Corporation)
PGLAL: Polyglyceryl-4 lauryl ether (manufactured by Daicel Corporation)
POE9AE: Polyoxyethylene (9) alkyl ether (number of carbon atoms in alkyl chain: 12 to 14) (manufactured by Nikko Chemicals Co., Ltd.)

### (2) Nonionic surfactant containing multiple bond in molecule

POE100E: Polyoxyethylene (10) oleyl ether (manufactured by Nikko Chemicals Co., Ltd.)

### 2-2. Ionic surfactant (amphoteric surfactant)

C-40H: 2-alkyl-N-carboxyethyl-N-hydroxyethylimidazolinium betaine (manufactured by LION SPECIALTY CHEMICALS CO., LTD.)

### 3. Inorganic rust inhibitor effective component

PPA: Polyphosphoric acid (manufactured by FUJIFILM Wako Pure Chemical Corporation)

### 4. Method for preparing thick undiluted solution

An aqueous NaClO solution having an effective chlorine concentration of 12.0% by mass (NEOLUX Super, supplier: Shimada Shoten Co., Ltd.) was diluted with ion-exchange water so that the effective chlorine concentration was 11000 ppm to prepare 2400 mL of a raw material aqueous solution. Then, 200 mL of a weakly acidic ion-exchange resin, Amberlite IRC-76 (H⁺ form, manufactured by ORGANO CORPORATION) was weighed, the raw material aqueous solution was all added thereto, and the resultant was mixed by stirring with a fluororesin stirring blade for 20 minutes so that the weakly acidic ion-exchange resin was uniformly dispersed. During the stirring, the pH of the mixture was monitored, and the stirring was stopped when the pH reduced to reach 6.3. After the stirring, the mixture was left to stand until the resin was settled out. A hypochlorous acid aqueous solution as a supernatant was collected by decantation as a thick undiluted solution into a polyethylene container while filtered through a #200 filter cloth so that the resin did not enter the container. The solution was left to stand at room temperature for 3 hours until the pH reached 4.8. After left to stand, the thick undiluted solution was subjected to measurement of effective chlorine concentration C_{EC} using an effective chlorine concentration measurement kit, AQ-202 (manufactured by SIBATA SCIENTIFIC TECHNOLOGY LTD.) and as a result, the effective chlorine concentration was 9000 ppm. The pH of the aqueous solution indicates that hypochlorous acid is almost dissolved as molecular hypochlorous acid.

It should be noted that in a case where an aqueous solution to be evaluated is expected to have an effective chlorine concentration C_{EC} exceeding 300 ppm and the effective chlorine concentration of such an aqueous solution is measured using an effective chlorine concentration measurement kit, AQ-202 (manufactured by SIBATA SCIENTIFIC TECHNOLOGY LTD.), a measurement sample having a C_{EC} of 300 ppm or less needs to be prepared by dilution with ion-exchange water due to the quantification range of the measurement kit. In this case, the measurement sample is measured to obtain a measured value, and the measured value is multiplied by a dilution factor to determine the effective chlorine concentration C_{EC} of the aqueous solution to be evaluated (before dilution). In the above measurement, a measurement sample was prepared by dilution with a dilution factor of 50.

### Example 1

First, an A component aqueous solution prepared by stirring a mixture of 0.4 g of a carboxylic acid salt, Na-Fo and 9.6 g of tap water for 10 minutes until they were uniformly mixed and a B component aqueous solution prepared by stirring a mixture of 0.04 g of a nonionic surfactant, PGLE and 9.96 g of tap water for 10 minutes until they were uniformly mixed were uniformly mixed to prepare a rust inhibitor aqueous solution having a B/A ratio of 0.10. At the same time, 0.9 g of the above-described thick undiluted solution (the molecular hypochlorous acid aqueous solution having a C_{EC} of 9000 ppm) was added to 19.1 g of tap water, and the resultant was stirred for 1 minute to prepare a diluted hypochlorous acid aqueous solution. Then, the diluted hypochlorous acid aqueous solution and the rust inhibitor aqueous solution were mixed in a mass ratio of 1:1 (specifically, the amount of each of the solutions was 20 g) to prepare a hypochlorous acid aqueous solution-based bactericidal detergent. The obtained hypochlorous acid aqueous solution-based bactericidal detergent was subjected to appearance evaluation, evaluation based on rust test, pH evaluation, safety evaluation, and bactericidal property evaluation. The details of evaluation methods will be described below, and results are shown in Table 1. It should be noted that "↑" in the table means "same as above", and C_{EC}, C_{A}, C_{B}, and B/A shown in the column " Concentration of each components of hypochlorous acid aqueous solution-based bactericidal detergent" represent an effective chlorine concentration just after preparation, an A component concentration, a B component concentration, and a ratio of the mass of the B component to the mass of the A component, respectively. Further, n and v in n/v represent the number of carbon atoms of the carboxylic acid and the valence of the carboxylic acid, respectively.

### (1) Appearance evaluation

Forty milliliters of the hypochlorous acid aqueous solution-based bactericidal detergent (aqueous solution to be evaluated) just after preparation was placed in a 50-cc glass bottle, and a sheet of paper printed with characters was put behind part of the glass bottle filled with the solution to visually evaluate the appearance of the solution.
o: The characters can visually be confirmed through the solution and an apparent white turbidity is not observed.
×: The characters cannot visually be confirmed through the solution and an apparent white turbidity is observed.

### (2) Rust test

Two steel balls having a diameter of 5 mm ("Eggs steel ball 5mm (TAIHO TRADING Co., Ltd.)") were immersed in 40 mL of the hypochlorous acid aqueous solution-based bactericidal detergent (aqueous solution to be evaluated) placed in a 50-cc glass bottle. After a lapse of a predetermined time, the presence or absence of rust was visually observed to make an evaluation according to the following criteria AAA to D. It should be noted that in Example 1 and Examples 2 to 5 and 20 that will be described later, the test was performed five times and repeatability was confirmed.

AAA: Rust was not observed even after 6 hours or more
AA: Rust was observed after 3 hours or more and less than 6 hours.
A: Rust was observed after 1 hour or more and less than 3 hours.
B: Rust was observed after 30 minutes or more and less than 1 hour.
C: Rust was observed after 10 minutes or more and less than 30 minutes.
D: Rust was observed within less than 10 minutes.

### (3) pH evaluation (evaluation of pH change before and after contact with metal)

The pH of the hypochlorous acid aqueous solution-based bactericidal detergent (aqueous solution to be evaluated) used above in (2) Rust test was measured at two time points, one within 30 minutes from just after preparation of the hypochlorous acid aqueous solution-based bactericidal detergent and before the immersion of the steel balls (initial stage) and (c) the other after a lapse of one day from the start of immersion of the steel balls. It should be noted that the measurement was performed using a pH meter F-55 (manufactured by HORIBA, Ltd.)

### (4) Effective chlorine concentration (evaluation of stability during contact with metal)

The effective chlorine concentration of the hypochlorous acid aqueous solution-based bactericidal detergent (aqueous solution to be evaluated) used above in (2) Rust test was measured at the following four time points, (a) just after preparation of the hypochlorous acid aqueous solution-based bactericidal detergent and before immersion of the steel balls, (b) after a lapse of 10 to 30 minutes from preparation and before immersion of the steel balls (initial stage), (c) after a lapse of 2 hours from the start of immersion of the steel balls, and (d) after a lapse of 1 day from the start of immersion of the steel balls.

The effective chlorine concentration was measured using water quality test paper (Nissan Aqua Check HC, measurable concentrations: 600, 400, 200, 100, 50, 25, and 0 ppm or Nissan Aqua Check 5, measurable concentrations: 10, 4, 2, 1, 0.5, 0 ppm). Such a method is performed by dipping the test paper into the solution and visually comparing a color produced with a color chart to measure the effective chlorine concentration. For example, "200 to 100" means that a color visually observed was between 200 ppm and 100 ppm in the color chart.

### (5) Bactericidal property evaluation

A dental alginate impression material (Tokuyama A-1α, manufactured by Tokuyama Dental Corporation) was used to prepare an alginate plate having a length of 19 mm, a width of 57 mm, and a thickness of 3 mm. Then, 100 µL of saliva was applied onto one surface of the alginate plate, and then the alginate plate was lightly washed with water. Then, the alginate plate was immersed in 200 mL of a hypochlorous acid aqueous solution-based bactericidal detergent (aqueous solution to be evaluated) prepared at the same time in the same manner as described above. After the immersion for 30 seconds, the alginate plate was taken out, and the saliva-treated surface of the alginate plate was lightly pressed on a brain-heart infusion agar medium so as to come into contact with the entirety of the medium. The alginate plate was removed, and the agar medium was cultured in an incubator at 37° for 1 week and then visually observed to determine the presence or absence of bacteria (colonies). As a result, colonies were not observed. As a reference, the evaluation was performed in the same manner as described above except that sterilized water was used instead of the aqueous solution to be evaluated, and as a result, colonies were observed. This revealed that the aqueous solution to be evaluated had a bactericidal property (sterilization property).

**[Table 1]**

| Examples | Concentration of each component of hypochlorous acid aqueous solution-based bactericidal detergent | | | | | | | | Evaluation results | | | | | | |
|---|---|---|---|---|---|---|---|---|---|---|---|---|---|---|---|
| | Effective chlorine concentration C_{EC} (ppm) | Rust inhibitor effective component | | | | | | | Appearance | Rust test | pH | | Effective chlorine concentration C_{EC} (ppm) | | |
| | | A: Saturated carboxylic acid metal salt | | | | B: Nonionic surfactant | | B/A | | | Initial stage | After one day | Initial stage | After two hours | After one day |
| | | Type | n/v * | C_{A} (ppm) | C_{A}/C_{EC} | Type | C_{B} (ppm) | | | | | | | | |
| 1 | 200 | Na-Fo | 1/1 | 10000 | 50 | PGLE | 1000 | 0.10 | ○ | A | 6.5 | 6.3 | 200 | 200-100 | 200-100 |
| 2 | ↑ | Ca-Ac | 2/1 | ↑ | ↑ | PGLE | ↑ | ↑ | ○ | AAA | 6.8 | 6.7 | 200 | 200 | 200 |
| 3 | ↑ | ↑ | ↑ | ↑ | ↑ | PGLAL | ↑ | ↑ | ○ | AAA | 6.8 | 6.7 | 200 | 200 | 200-100 |
| 4 | ↑ | ↑ | ↑ | ↑ | ↑ | POE9AE | ↑ | ↑ | ○ | AAA | 6.7 | 6.7 | 200 | 200 | 200-100 |
| 5 | ↑ | ↑ | ↑ | ↑ | ↑ | POE10OE | ↑ | ↑ | ○ | A | 6.8 | 6.8 | 100 | 100 | 100 |
| 6 | ↑ | Na-Ac | ↑ | ↑ | ↑ | ↑ | ↑ | ↑ | ○ | AAA | 6.9 | 6.7 | 200 | 200 | 200-100 |
| 7 | ↑ | Mg-Ac | ↑ | ↑ | ↑ | ↑ | ↑ | ↑ | ○ | AAA | 6.9 | 6.7 | 200 | 200 | 200-100 |
| 8 | ↑ | Zn-Ac | ↑ | ↑ | ↑ | ↑ | ↑ | ↑ | ○ | AAA | 6.5 | 6.4 | 200 | 200 | 200 |
| 9 | ↑ | Sr-Ac | ↑ | ↑ | ↑ | ↑ | ↑ | ↑ | ○ | AAA | 7.0 | 7.0 | 200 | 200 | 200-100 |
| 10 | ↑ | Ca-Pr | 3/1 | ↑ | ↑ | PGLE | ↑ | ↑ | ○ | AAA | 6.9 | 6.8 | 200 | 200-100 | 200-100 |
| 11 | ↑ | Na-Pr | ↑ | ↑ | ↑ | PGLE | ↑ | ↑ | ○ | AAA | 7.0 | 6.9 | 200 | 200-100 | 200-100 |
| 12 | ↑ | Na-Bu | 4/1 | ↑ | ↑ | PGLE | ↑ | ↑ | ○ | AAA | 6.9 | 6.4 | 200 | 200-100 | 100 |
| 13 | ↑ | Na-Su | 4/2 | ↑ | ↑ | PGLE | ↑ | ↑ | ○ | A | 7.1 | 7.1 | 200-100 | 100 | 100-50 |
| 14 | ↑ | Na-He | 6/1 | ↑ | ↑ | PGLE | ↑ | ↑ | ○ | AA | 6.9 | 6.6 | 200 | 100 | 100-50 |

| | | | | | | | | | | | | | | | |
|---|---|---|---|---|---|---|---|---|---|---|---|---|---|---|---|
| * n/v: "n" means the number of carbon atoms of the carboxylic acid and "v" means the valence of the carboxylic acid. | | | | | | | | | | | | | | | |

### Examples 2 to 40

Bactericidal compositions were prepared in the same manner as in Example 1 except that the types of surfactant and carboxylic acid salt used and the contents of the surfactant and the carboxylic acid salt were changed as shown in Tables 1 to 3 and were evaluated in the same manner as described above. Evaluation results are shown in Tables 1 to 3. It should be noted that the bactericidal property evaluation was performed only on Example 40, and it was confirmed that colonies were not formed as in the case of Example 1.

As shown in Tables 1 to 3, the bactericidal detergents of the present invention prepared by the method for preparing a bactericidal detergent of the present invention using the rust inhibitor for hypochlorous acid aqueous solution of the present invention have an excellent rust inhibiting property evaluated as A to AAA in the rust test within a wide C_{A}/C_{EC} range and are unlikely to undergo a reduction in effective chlorine concentration even after preparation and therefore can maintain a chlorine concentration effective for disinfection for about 1 day or longer even when coming into contact with, for example, metal. Further, the bactericidal detergents of the present invention can maintain a neutral pH without undergoing a pH reduction even when coming into contact with metal, and therefore can safely be handled.

**[Table 2]**

| Examples | Concentration of each component of hypochlorous acid aqueous solution-based bactericidal detergent | | | | | | | | Evaluation results | | | | | | |
|---|---|---|---|---|---|---|---|---|---|---|---|---|---|---|---|
| | Effective chlorine concentration C_{EC} (ppm) | Rust inhibitor effective component | | | | | | | Appearance | Rust test | pH | | Effective chlorine concentration C_{EC} (ppm) | | |
| | | A: Saturated carboxylic acid metal salt | | | | B: Nonionic surfactant | | B/A | | | Initial stage | After one day | Initial stage | After two hours | After one day |
| | | Type | n/v * | C_{A} (ppm) | C_{A}/ C_{EC} | Type | C_{B} (ppm) | | | | | | | | |
| 15 | 200 | Ca-Ac | 2/1 | 500 | 3 | PGLE | 1000 | 2.00 | ○ | A | 6.7 | 6.7 | 200 | 100 | 4 |
| 16 | ↑ | ↑ | ↑ | 1000 | 5 | ↑ | 1000 | 1.00 | ○ | A | 6.7 | 6.6 | 200 | 200-100 | 6 |
| 17 | ↑ | ↑ | ↑ | 2000 | 10 | ↑ | 1000 | 0.50 | ○ | A | 6.9 | 6.9 | 200 | 200-100 | 100 |
| 18 | ↑ | ↑ | ↑ | 5000 | 25 | ↑ | 1000 | 0.20 | ○ | AA | 6.8 | 6.9 | 200 | 200 | 200 |
| 19 | ↑ | ↑ | ↑ | 8000 | 40 | ↑ | 1000 | 0.13 | ○ | AA | 7.0 | 7.0 | 200 | 200 | 200 |
| 20 | ↑ | ↑ | ↑ | 15000 | 75 | ↑ | 1000 | 0.07 | ○ | AAA | 6.9 | 7.0 | 200 | 200 | 200-100 |
| 21 | ↑ | ↑ | ↑ | 100000 | 500 | ↑ | 1000 | 0.01 | ○ | AAA | 7.1 | 7.1 | 200 | 200-100 | 25-10 |
| 22 | ↑ | ↑ | ↑ | 200000 | 1000 | ↑ | 1000 | 0.005 | ○ | AAA | 7.0 | 7.1 | 200 | 200-100 | 10 |
| 23 | ↑ | ↑ | ↑ | 1000 | 5 | ↑ | 10000 | 10.00 | ○ | A | 6.8 | 5.5 | 200 | 200-100 | 100 |
| 24 | ↑ | ↑ | ↑ | 5000 | 25 | ↑ | 500 | 0.10 | ○ | A | 6.7 | 6.7 | 200 | 200-100 | 10 |
| 25 | ↑ | ↑ | ↑ | 10000 | 50 | ↑ | 500 | 0.05 | ○ | AA | 6.8 | 6.8 | 200 | 200 | 200 |
| 26 | ↑ | ↑ | ↑ | 15000 | 75 | ↑ | 500 | 0.03 | ○ | AAA | 6.8 | 6.8 | 200 | 200 | 200 |
| 27 | ↑ | ↑ | ↑ | 7500 | 38 | ↑ | 1250 | 0.17 | ○ | AAA | 6.8 | 6.8 | 200 | 200 | 200 |
| 28 | ↑ | ↑ | ↑ | 10000 | 50 | ↑ | 10000 | 1.00 | ○ | AAA | 6.8 | 6.8 | 200 | 200 | 200-100 |
| 29 | ↑ | ↑ | ↑ | 100000 | 500 | ↑ | 10000 | 0.10 | ○ | AAA | 7.0 | 7.1 | 200 | 200 | 25-10 |
| 30 | ↑ | ↑ | ↑ | 1000 | 5 | POE9AE | 1000 | 1.00 | ○ | A | 6.9 | 6.8 | 200 | 200-100 | 10 |
| 31 | ↑ | ↑ | ↑ | 5000 | 25 | ↑ | 1000 | 0.20 | ○ | AA | 6.8 | 6.9 | 200 | 200 | 100 |

| | | | | | | | | | | | | | | | |
|---|---|---|---|---|---|---|---|---|---|---|---|---|---|---|---|
| * n/v: "n" means the number of carbon atoms of the carboxylic acid and "v" means the valence of the carboxylic acid. | | | | | | | | | | | | | | | |

**[Table 3]**

| Examples | Concentration of each component of hypochlorous acid aqueous solution-based bactericidal detergent | | | | | | | | Evaluation results | | | | | | |
|---|---|---|---|---|---|---|---|---|---|---|---|---|---|---|---|
| | Effective chlorine concentration C_{EC} (ppm) | Rust inhibitor effective component | | | | | | | Appearance | Rust test | pH | | Effective chlorine concentration C_{EC} (ppm) | | |
| | | A: Saturated carboxylic acid metal salt | | | | B: Nonionic surfactant | | B/A | | | Initial stage | After one day | Initial stage | After two hours | After one day |
| | | Type | n/v * | C_{A} (ppm) | C_{A}/ C_{EC} | Type | C_{B} (ppm) | | | | | | | | |
| 32 | 400 | Ca-Ac | 2/1 | 10000 | 25 | PGLE | 1000 | 0.10 | ○ | A | 6.5 | 6.6 | 400 | 400~200 | 200-100 |
| 33 | ↑ | ↑ | 2 | 20000 | 50 | ↑ | ↑ | 0.05 | ○ | AA | 6.7 | 6.7 | 400 | 400 | 400-200 |
| 34 | ↑ | ↑ | 2 | 30000 | 75 | ↑ | ↑ | 0.03 | ○ | AAA | 6.7 | 6.7 | 400 | 400 | 400-200 |
| 35 | ↑ | ↑ | 2 | 10000 | 25 | ↑ | 2000 | 0.20 | ○ | AA | 6.6 | 6.7 | 400 | 400 | 400-200 |
| 36 | ↑ | ↑ | 2 | 20000 | 50 | ↑ | ↑ | 0.10 | ○ | AAA | 6.8 | 6.7 | 400 | 400 | 400-200 |
| 37 | ↑ | ↑ | 2 | 30000 | 75 | ↑ | ↑ | 0.07 | ○ | AAA | 7.0 | 7.0 | 400 | 400 | 400-200 |
| 38 | 50 | ↑ | 2 | 1000 | 20 | ↑ | 250 | 0.25 | ○ | A | 6.9 | 6.9 | 50 | 50 | 25 |
| 39 | ↑ | ↑ | 2 | 2000 | 40 | ↑ | ↑ | 0.13 | ○ | AA | 7.0 | 7.0 | 50 | 50 | 50-25 |
| 40 | ↑ | ↑ | 2 | 5000 | 100 | ↑ | ↑ | 0.05 | ○ | AAA | 7.0 | 7.0 | 50 | 50 | 50-25 |

| | | | | | | | | | | | | | | | |
|---|---|---|---|---|---|---|---|---|---|---|---|---|---|---|---|
| * n/v: "n" means the number of carbon atoms of the carboxylic acid and "v" means the valence of the carboxylic acid. | | | | | | | | | | | | | | | |

### Comparative Example 1

The above-described thick undiluted solution (molecular hypochlorous acid aqueous solution having a C_{EC} of 9000 ppm) was diluted with tap water to prepare a diluted hypochlorous acid aqueous solution having an effective chlorine concentration C_{EC} of 200 ppm, and the diluted hypochlorous acid aqueous solution was evaluated in the same manner as in Example 1. Results are shown in Table 4.

### Comparative Example 2

A diluted hypochlorous acid aqueous solution having an effective chlorine concentration C_{EC} of 200 ppm was prepared in the same manner as in Comparative Example 1 except that a nonionic surfactant, PGLE was added during dilution so that the concentration of PGLE was 1000 ppm, and was evaluated in the same manner as in Example 1. Results are shown in Table 4.

### Comparative Examples 3 to 19

Hypochlorous acid aqueous solution-based bactericidal detergents (aqueous solutions to be evaluated) were each prepared according to the preparation method used in Example 1 using a saturated carboxylic acid metal salt or an unsaturated carboxylic acid metal salt and a surfactant shown in Table 4 so that the concentration of each of the components was as shown in Table 4, and were evaluated in the same manner as in Example 1. Results are shown in Table 4.

**[Table 4]**

| Comp . Examples | Concentration of each component of hypochlorous acid aqueous solution-based bactericidal detergent | | | | | | | | | | Evaluation results | | | | | | |
|---|---|---|---|---|---|---|---|---|---|---|---|---|---|---|---|---|---|
| | Effective chlorine concentration C_{EC} (ppm) | Rust inhibitor effective component | | | | | | | Another component | | Appearance | Rust test | pH | | Effective chlorine concentration C_{EC} (ppm) | | |
| | | A: Saturated carboxylic acid metal salt or unsaturated carboxylic acid metal salt | | | | B: Nonionic surfactant | | B/A | Type | ppm | | | Initial stage | After one day | Initial stage | After two hours | After one day |
| | | Type | n/v ^{*2} | CA (ppm) | C_{A}/ C_{EC} | Type | C_{B} (ppm) | | | | | | | | | | |
| 1 | 200 | - | - | - | - | - | - | - | - | | ○ | D | 6.7 | 4.2 | 200 | 200 | 200 |
| 2 | ↑ | - | - | - | - | PGLE | 1000 | - | - | | ○ | C | 6. 8 | 2.9 | 200 | 100 | 25 |
| 3 | ↑ | Ca-Ac | 2/1 | 1000 | 5 | - | - | - | - | | ○ | D | 6.7 | 6.7 | 200 | 200 | 200 |
| 4 | ↑ | ↑ | ↑ | 10000 | 50 | - | - | - | - | | ○ | B | 6. 9 | 6.9 | 200 | 200 | 200 |
| 5 | ↑ | ↑ | ↑ | 1000 | 5 | - | - | - | C-40H | 1000 | ○ | D | 5.9 | 5.7 | 100 | 0 | - |
| 6 | ↑ | ↑ | ↑ | 10000 | 50 | - | - | - | C-40H | 1000 | ○ | C | 6.6 | 6.4 | 50 | 0 | - |
| 7 | ↑ | ↑ | ↑ | 10000 | 50 | - | - | - | C-40H | 10000 | ○ | AAA | 6. 6 | 7.0 | 0 | - | - |
| 8 | ↑ | ↑ | ↑ | 350000 | 1750 | PGLE | 1000 | 0.003 | - | - | ○ | AAA | 7.1 | 7.0 | 200 | 100 | 0 |
| 9 | ↑ | ↑ | ↑ | 75 | 0.38 | PGLE | 1000 | 13.33 | - | - | ○ | C | 6. 9 | 2.9 | 200 | 200-100 | 25 |
| 10 | ↑ | ↑ | ↑ | 10000 | 50 | PGLE | 30 | 0.003 | - | - | ○ | B | 6. 9 | 6.7 | 200 | 200 | 200 |
| 11 | ↑ | ↑ | ↑ | 10000 | 50 | PGLE | 120000 | 12.00 | - | - | ○ | A | 6. 6 | 2.5 | 200 | 25 | 0 |
| 12 | ↑ | ↑ | ↑ | 10000 | 50 | PGLE | 1000 | 0.10 | PPA | 5000 | × | AAA | 8.0 | 8.0 | 200 | 200 | 200-100 |
| 13 | ↑ | Na-Oc | 8/1 | 10000 | 50 | PGLE | 1000 | 0.10 | - | - | ○ | B | 6. 9 | 6.7 | 200-100 | 100 | 25-10 |
| 14 | ↑ | Na-No | 9/1 | 10000 | 50 | PGLE | 1000 | 0.10 | - | - | ○ | B | 7.5 | 7.5 | 200-100 | 100-50 | 10 |
| 15 | ↑ | Na-De | 10/1 | 10000 | 50 | PGLE | 1000 | 0.10 | - | - | ○ | C | 7.5 | 7.4 | 200-100 | 50-25 | 10 |
| 16 | ↑ | Na-Me ^{*1} | 4/1 | 10000 | 50 | PGLE | 1000 | 0.10 | - | - | ○ | AAA | 7.2 | 7.4 | 200 | 0 | - |
| 17 | ↑ | Na-Ox | 2/2 | 10000 | 50 | PGLE | 1000 | 0.10 | - | - | ○ | A | 6.4 | 6.9 | 100 | 0 | - |
| 18 | ↑ | Na-Ma ^{*1} | 2/2 | 10000 | 50 | PGLE | 1000 | 0.10 | - | - | ○ | AAA | 7.4 | 7.4 | 100-50 | 25-10 | 0 |
| 19 | ↑ | Na-Ci | 6/3 | 10000 | 50 | PGLE | 1000 | 0.10 | - | - | ○ | AAA | 7.3 | 7.2 | 200-100 | 0 | - |

| | | | | | | | | | | | | | | | | | |
|---|---|---|---|---|---|---|---|---|---|---|---|---|---|---|---|---|---|
| *1 Na-Me and Na-Ma used in Comparative Example 16 and Comparative Example 18 are unsaturated carboxylic acid metal salts and others are A: saturated carboxylic acid metal salts. *2 n/v: "n" means the number of carbon atoms of the carboxylic acid and "v" means the valence of the carboxylic acid. | | | | | | | | | | | | | | | | | |

As shown in Table 4, Comparative Example 1 containing no rust inhibitor marked the lowest rating, D in the rust test, and the pH only slightly reduced in one day, which was considered to result from slight self-decomposition of hypochlorous acid. Comparative Example 2 containing, as a component effective for rust inhibition, only the B component without containing the A component had a rust inhibiting effect, but the degree of the effect was low, and the pH and the effective chlorine concentration reduced with time. In the case of Comparative Examples 3 and 4 containing, as a rust inhibiting component, only the A component without containing the B component, a rust inhibiting effect was confirmed when C_{A}/C_{EC} was large. However, it cannot be said that the effect was satisfactory because the rating of the effect was B even when C_{A}/C_{EC} was 50. In the case of Comparative Examples 5 and 6 using the A component in combination with a surfactant not corresponding to the B component, a rust inhibiting effect was improved when a larger amount of the A component was added, but the effective chlorine concentration reduced in a short time.

0 0 7 6 In the case of Comparative Examples 8 to 11 using the A component and the B component in combination so that the ratio between them was outside the range specified in the present invention, all the rust inhibiting effect, pH stability, and effective chlorine concentration stability could not be achieved at the same time, and at least one of them was evaluated as low. As can be seen from Comparative Example 12, even when the A component and the B component were used in combination and the ratio between them was within the range specified in the present invention, a white turbidity was produced when PPA as an inorganic rust inhibiting component was added, and therefore the appearance was evaluated as ×. As can be seen from Comparative Examples 13 to 19, when a carboxylic acid metal salt other than the A component was used, all the rust inhibiting effect, pH stability, and effective chlorine concentration stability could not be achieved at the same time even when the carboxylic acid metal salt was used in combination with the B component.

## Claims

1. A rust inhibitor for hypochlorous acid aqueous solution to impart a rust inhibiting effect to a hypochlorous acid aqueous solution to inhibit generation of rust on a metallic surface contacted by the hypochlorous acid aqueous solution, the rust inhibitor comprising
an effective component substantially including only: an A component composed of (Al) a metal salt of formic acid and/or (A2) a metal salt of a saturated carboxylic acid whose number n of carbon atoms contained in a molecule is 2 or more, whose valence v of the acid is 1 or 2, and whose value n/v obtained by dividing the number n of carbon atoms by the valence v of the carboxylic acid is 2 to 6; and a B component composed of a nonionic surfactant, wherein a mass ratio B/A of the B component to the A component in the effective component is 0.005 to 10.0.

2. The rust inhibitor for hypochlorous acid aqueous solution according to claim 1, comprising an aqueous solution of the effective component.

3. The rust inhibitor for hypochlorous acid aqueous solution according to claim 1 or 2, wherein the A component is composed of a saturated monocarboxylic acid metal salt whose v is 1, and the B component is composed of a polyglycerin fatty acid ester and/or a polyoxyethylene alkyl ether.

4. A method for preparing a bactericidal detergent that includes a hypochlorous acid aqueous solution having an effective chlorine concentration of 2 to 2000 ppm by mass and a pH of 5.5 to 7.5 and that has a rust inhibiting effect to inhibit generation of rust on a metallic surface contacted thereby, the method comprising
the step of diluting, with water or an aqueous solvent, a hypochlorous acid aqueous solution that has an effective chlorine concentration higher than that of the hypochlorous acid aqueous solution described above and a pH of 3.0 to 7.5 and that does not contain a metal salt of a saturated carboxylic acid and a nonionic surfactant, wherein
during dilution in the dilution step, the rust inhibitor for hypochlorous acid aqueous solution according to any one of claims 1 to 3 is added so that a concentration of the effective component is 1000 ppm by mass to 25% by mass with respect to a mass of a hypochlorous acid aqueous solution obtained after dilution.

5. The method for preparing a bactericidal detergent according to claim 4, wherein the rust inhibitor for hypochlorous acid aqueous solution is added in the dilution step so that a ratio C_{A}/C_{EC} of a concentration C_{A} (ppm by mass) of the A component to an effective chlorine concentration C_{EC} (ppm by mass) after dilution is 2 to 1000.

6. A bactericidal detergent comprising a hypochlorous acid aqueous solution in which the rust inhibitor for hypochlorous acid aqueous solution according to any one of claims 1 to 3 is dissolved, the hypochlorous acid aqueous solution having an effective chlorine concentration of 2 to 2000 ppm by mass, a pH of 5.5 to 7.5, a concentration of the effective component of 1000 ppm by mass to 25% by mass, and a ratio C_{A}/C_{EC} of a concentration C_{A} (ppm by mass) of the A component to the effective chlorine concentration C_{EC} (ppm by mass) of 2 to 1000.

7. The bactericidal detergent according to claim 6, which does not substantially contain phosphoric acid, polyphosphoric acid, phosphonic acid, and salts thereof.

8. A bactericidal detergent comprising a hypochlorous acid aqueous solution that contains a rust inhibitor containing an effective component substantially including only: an A component composed of (Al) a metal salt of formic acid and/or (A2) a metal salt of a saturated carboxylic acid whose number n of carbon atoms contained in a molecule is 2 or more, whose valence v of the acid is 1 or 2, and whose value n/v obtained by dividing the number n of carbon atoms by the valence v of the carboxylic acid is 2 to 6; and a B component composed of a nonionic surfactant so that a mass ratio B/A of the B component to the A component in the effective component is 0.005 to 10.0, and that has an effective chlorine concentration of 2 to 2000 ppm by mass, a pH of 5.5 to 7.5, a concentration of the effective component of 1000 ppm by mass to 25% by mass, and a ratio C_{A}/C_{EC} of a concentration C_{A} (ppm by mass) of the A component to the effective chlorine concentration C_{EC} (ppm by mass) of 2 to 1000.
